# EUROPÄISCHE PATENTSCHRIFT

(11) **EP 0 500 888 B1**
(45) Veröffentlichungstag und Bekanntmachung des Hinweises auf die Patenterteilung: **24.01.1996**
(21) Anmeldenummer: 91916294.1
(22) Anmeldetag: 13.09.1991
(51) Int. Cl.: G05G 1/14, B60K 41/28, B60T 7/06

(54) **PEDALEINHEIT FÜR EIN KRAFTFAHRZEUG**
FOOT-PEDAL UNIT FOR MOTOR VEHICLES
ENSEMBLE DE PEDALES POUR VEHICULE A MOTEUR

(30) Priorität: 15.09.1990 DE 4029334
(43) Veröffentlichungstag der Anmeldung: 02.09.1992
(73) Patentinhaber: ITT Automotive Europe GmbH, D-60488 Frankfurt (DE)
(72) Erfinder: DROTT, Peter, D-6230 Frankfurt/M 80 (DE); LOHBERG, Peter, D-6382 Friedrichsdorf (DE)
(86) Internationale Anmeldenummer: EP9101745
(87) Internationale Veröffentlichungsnummer: WO9205482

(56) Entgegenhaltungen:
- EP-A- 0 195 579
- EP-A- 0 271 617
- DE-A- 3 001 274
- US-A- 2 270 900
- US-A- 4 915 075

## Beschreibung

Die Erfindung betrifft eine Pedaleinheit für Kraftfahrzeug. Derartige Pedaleinheiten sind allgemein bekannt, da sie in allen heutigen PKWs beispielsweise eingebaut sind. Üblicherweise bestehen sie aus zwei bzw. drei Pedalen zur Betätigung von Gas, Bremse und Kupplung, letzteres entfällt bei Wagen mit Automatikgetriebe. Die bekannten Pedale sind mittels Hebelgestängen z. B. mit einem Geberzylinder verbunden. Teilweise werden die Pedalstellungen auch in elektronische Signale umgesetzt, etwa beim Gaspedal eines Fahrzeugs mit Einspritzmotor.

Die handelsüblichen Pedale werden einzeln in das Kraftfahrzeug eingebaut, dies ist teuer und zeitraubend. Außerdem müssen durch das ganze Fahrzeug hydraulische Leitungen verlegt werden. Auch muß die Spritzwand, die den Motorraum von der Fahrgastkabine trennt, mehrfach durchbrochen werden.

Aus der US-A-4,915,057 ist eine Pedaleinheit nach dem Oberbegriff des Anspruchs 1 bekannt, wobei die Stellung des Gaspedals in ein elektrisches Signal umgesetzt wird, welches an eine Motorsteuerungseinheit weitergegeben wird.

Diese Pedaleinheit hat den Nachteil, daß sie lediglich ein Gaspedal enthält, d.h. weitere Pedaleinheiten zum Bremsen und ggf. Kuppeln erforderlich sind. Würde man diese analog zu der Gaspedaleinheit auslegen, müßten weitere zwei getrennte Einheiten zur Umsetzung der elektrischen Signalen mit entsprechend großer Anzahl zu entsprechenden Brems- bzw. Kupplungssteuerungseinheiten führenden Leitungen vorgesehen werden.

Eine Montage mehrerer Pedale auf einer Pedaleinheit, wie aus der DE-A 30 01 274 bekannt, würde zwar eine Vormontage ermöglichen, das Problem, eine Vielzahl elektrischer Leitungen mit fahrzeugseitigen Steuerungseinheiten zu verbinden, bleibt aber weiterhin bestehen.

Die Erfindung geht daher von der Aufgabe aus, eine Pedaleinheit zu schaffen, die montagefreundlich ist und ohne Durchbrüche der Spritzwand im Pedalbereich auskommt. Weiterhin soll die erfindungsgmäße Pedaleinheit den Anforderungen der modernen Industriefertigung, wie modulare Bauweise oder Just-in-time - Lieferung gerecht werden und eine intelligente Verarbeitung der anfallenden Signale gestatten.

Diese Aufgabe wird durch die im Hauptanspruch angegebenen Merkmale gelöst. Selbstverständlich ist der Erfindungsgegenstand auch für Kraftfahrzeuge mit Automatikgetriebe verwendbar und benötigt dann nur ein Gas- und ein Bremspedal.

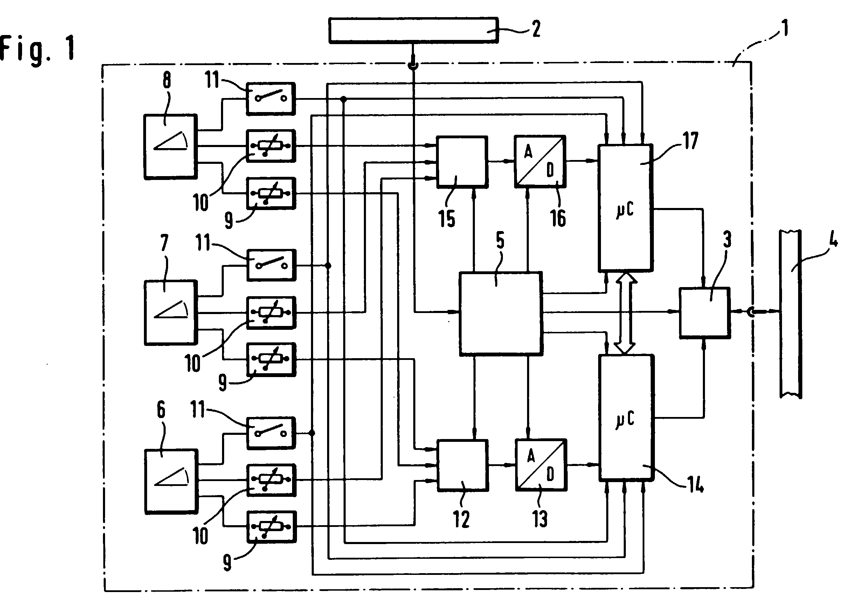

Die Datenverarbeitungsstufe kann aus Sicherheitsgründen redundant aufgebaut sein. Sie verarbeitet die mittels der Pedale erzeugten Signale und macht letztere busfähig. Der Aufbau einer möglichen Datenverarbeitungsstufe ist in Fig. 1 dargestellt und wird im Zusammenhang mit der Figurenbeschreibung näher erläutert.

Bei redundanter Signalverarbeitung ist es besonders zweckmäßig, daß jedes Pedal mindestens zwei Pedalstellungssignale unabhängig voneinander erzeugt.

Die Montagefreundlichkeit der Erfindung läßt sich durch Anwendung der sich aus Anspruch 2 ergebenden Merkmale erhöhen.

Gemäß einer anderen Weiterbildung der Erfindung erzeugt jedes Pedal zwei die exakte Pedalstellung wiedergebende Signale und ein weiteres Signal, welches eine Schwellwertüberschreitung anzeigt. Wenn sich also die beiden ersten Signale - durch einen Fehler im System - voneinander unterscheiden, ist es mit Hilfe des zusätzlichen Schwellwertsignales möglich, zu entscheiden, ob eine Pedalbetätigung vorliegt bzw. Welcher der beiden ersten Signalgeber richtige Signale abgibt.

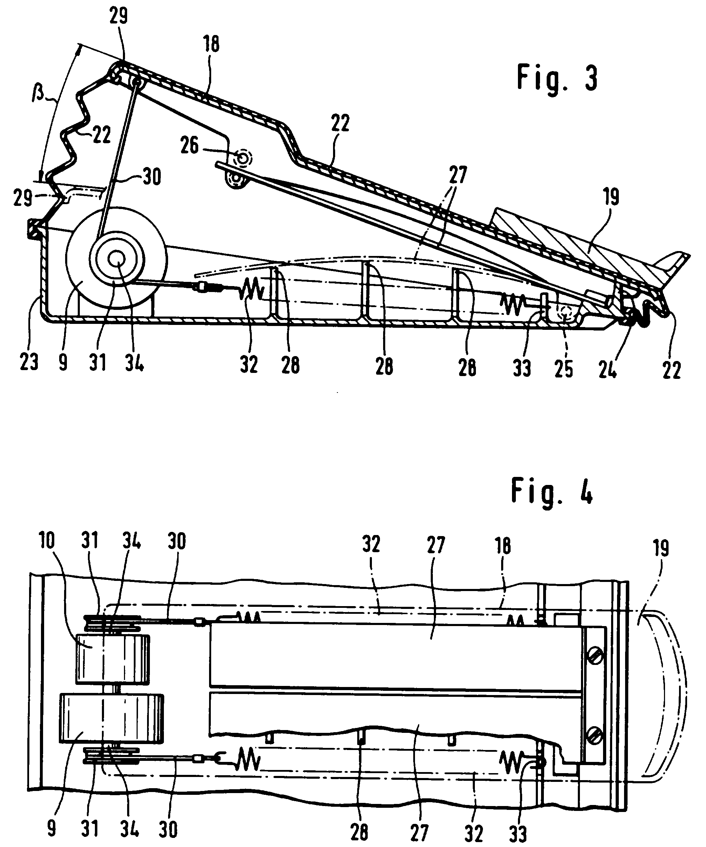

In besonders einfacher Weise lassen sich die Pedalstellungssignale mit Hilfe von Drehpotentiometern erzeugen. Diese in den Ansprüchen 7 bis 9 genauer beschriebene Möglichkeit wird anhand der Figuren 3 bis 5 erläutert.

Eine Weiterbildung der Erfindung sieht vor, unter der Trittplatte mindestens eine mit Anschlägen zusammenwirkende Blattfeder anzuordnen, diese Maßnahme ermöglicht es, die von konventionellen Pedalen her bekannte Kraft-Weg-Charakteristik auch bei der erfindungsgemäßen Pedaleinheit einzustellen. Ohne diese Anschläge erhält man die bei Federn übliche lineare Kraft-Weg-Kennlinie.

Besonders komfortabel wird jedes Pedal, wenn im Fersenbereich eine verstellbare Stütze vorhanden ist. Um die Pedaleinheit, der je nach Fahrergröße unterschiedlichen Fußneigung anpassen zu können, sieht eine andere Weiterbildung vor, die Pedalneigung verstellbar zu gestalten.

In vorteilhafter Weise sind die Verstellmechanismen elektrisch betätigbar, da die Pedaleinheit unter dem Lenkrad und dem Armaturenbrett einer mechanischen, direkten Verstellung kaum zugänglich ist. Ist das Fahrzeug mit einer Sitz-Memory-Funktion ausgestattet, so können die Verstellmechanismen auch hiermit kombiniert werden.

Mögliche Ausführüngsformen der Erfindung werden im folgenden anhand der beiliegenden Zeichnungen erläutert. Es zeigt:
- Fig. 1: schematisch die Datehverarbeitungsstufe der Pedaleinheit,
- Fig. 2: eine mögliche Anordnung der Pedale in Vorderansicht (a) und Seitenansicht (b),
- Fig. 3: das Pedal aus Figur 2b im Schnitt,
- Fig. 4: das Pedal aus Figur 2a im Schnitt und
- Fig. 5: eine andere Pedalausführung im Schnitt,
- Fig. 6: eine Pedaleinheit mit abgeänderten Pedalen,
- Fig. 7-10: Einzelheiten zu mehreren Pedalen mit abweichenden Sensoren bzw. Wandlern im Pedal,
- Fig. 11: die Verbindung einer der Pedalen nach Fig. 7 bis 10
- und 12: mit einer Notbetätigung einer Bremse.

In Fig. 1 symbolisiert das gestrichelte Rechteck die Pedaleinheit 1, die mit einer Energieversorgung 2 und über die Schnittstelle 3 auch mit einem Datenbus 4 des Fahrzeugs verbunden ist. Die Leitungen innerhalb der Pedaleinheit 1 werden nicht näher bezeichnet, der Datenfluß ist jeweils durch die Pfeilrichtung dargestellt.

Von der externen Energieversorgung 2, die üblicherweise vom Akkumulator des Kraftfahrzeuges gebildet wird, führt eine Leitung zur Einheit 5. Diese enthält einen Hilfsakkumulator sowie einen Stabilisator und versorgt alle anderen Bauelemente mit der notwendigen Energie. Der Hilfsakkumulator stellt sicher, daß die Pedaleinheit 1 auch nach Ausfall der Energieversorgung 2 noch eine Warnung an den-Fahrer abgeben kann, und daß letzterer noch Zeit hat, sein Fahrzeug zum Stehen zu bringen.

Die Pedaleinheit 1 weist ein Gaspedal 6, ein Bremspedal 7 und ein Kupplungspedal 8 auf. Jedes der Pedale 6,7,8 betätigt zwei Potentiometer 9 und 10 sowie einen Schalter 11. Der Schalter 11 wird betätigt, sobald das entsprechende Pedal 6,7 oder 8 einen bestimmten Schwellwert an Neigung überschreitet. Die Signale der Potentiometer 9 werden über den Multiplexer 12 und den Analog-/Digitalwandler 13 dem Mikroprozessor 14 zugeführt, dem auch die Signale aller Schalter 11 zugeleitet werden. Die Signale der Potentiometer 10 werden über den Multiplexer 15 und den Analog-/Digitalwandler 16 dem Mikroprozessor 17 zugeführt, dem ebenfalls die Signale aller Schalter 11 zugeleitet werden.

Zwischen den beiden Mikroprozessoren 14 und 17 findet ein Datenaustausch statt, durch den kontrollierbar ist, ob einer der beiden Datenverarbeitungszweige defekt ist. Durch den redundanten Aufbau der Pedaleinheit 1 werden Fehler erkannt, bevor die Information der Mikroprozessoren 14 und 17 über die Schnittstelle 3 an den Datenbus 4 abgegeben wird. Durch die den Mikroprozessoren 14 und 17 auch zugeleiteten Schaltersignale ist feststellbar, in welchem der Datenzweige wahrscheinlich der Fehler zu suchen ist.

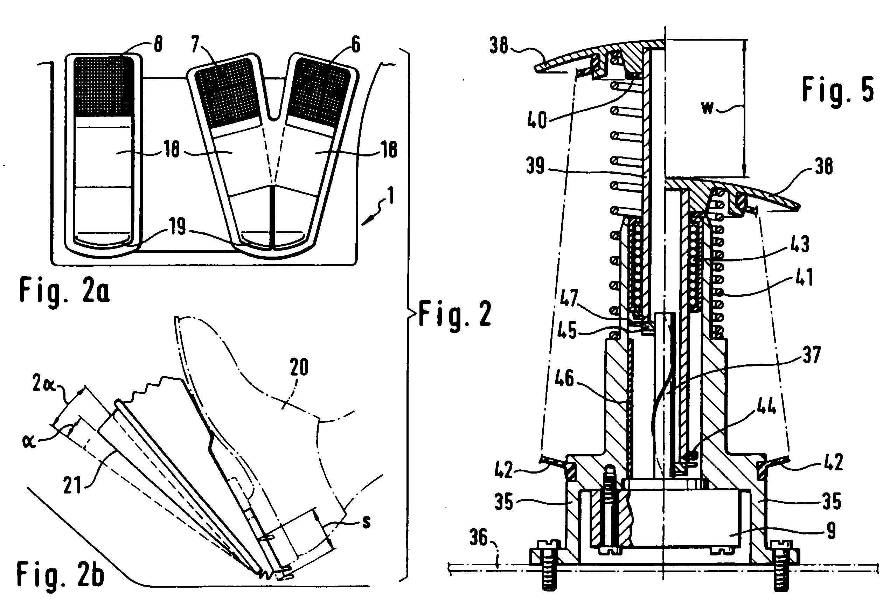

In Fig. 2a ist die Pedaleinheit 1 von vorn und in Figur 2b von der Seite dargestellt. Alle drei Pedale 6,7 und 8 sind als Trittplatten 18 ausgebildet. Da Gaspedal 6 und Bremspedal 7 beide vom rechten Fahrerfuß betätigt werden, sind sie nahe beieinander angeordnet und weisen eine gemeinsame Fersenstüzte 19 auf. So muß der Fahrer seinen Fuß, wenn er vom-Gas zur Bremse oder umgekehrt wechselt, nur drehen. Auch das Kupplungspedal 8 ist mit einer Stütze 19 für die Ferse ausgerüstet.

In Fig. 2b ist eines der Pedale-6-,7 oder 8 von der Seite gezeigt. Auf dem Pedal 6,7 oder 8 steht der Fuß 20 des Fahrers. Erkennbar ist, daß sowohl die Stütze 19 um die Strecke s als auch die Neigung der Trittplatte 18 aus der Mittellage 21 in jede Richtung um den Winkel α verstellbar ist. Insgesamt ist die Neigung also um den Gesamtwinkel 2 α verstellbar. Durch diese Verstellmöglichkeiten kann die Pedaleinheit 1 der Größe des Fahrers angepaßt werden. Die Endstellungen der Verstellbereiche sind jeweils gestrichelt angedeutet.

In Fig. 3 ist das Pedal 6,7 oder 8 von der Seite im Schnitt gezeigt. Die Trittplatte 18 mit der Stütze 19 ist von dem Faltenbalg 22 überzogen, der sie auch mit dem Gehäuse 23 der Pedaleinheit 1 verbindet. Die Trittplatte 18 liegt an der Auflage 24 des Gehäuses 23 auf und ist an der Befestigung 25 drehbar mit dem Gehäuse 23 verbunden. Außerdem ist an der Anlenkstelle 26 der Trittplatte 18 eine Blattfeder 27 mit verstellbarer Hysterese angelenkt, deren anderes Ende am Gehäuse 23 eingespannt ist. Die Blattfeder 27 wirkt mit Gehäuseanschlägen 28 zusammen, durch deren Position die Kraft-Weg-Charakteristik des Pedals einstellbar ist: .

An der Trittplatte 18 ist am freien Ende 29 ein Zugseil 30 befestigt, welches über eine Rolle 31 läuft und Von einer Zugfeder 32 straff gehalten wird. Die zugfeder 32 ist an einem Vorsprung 33 des Gehäuses 23 eingehenkt. Die Länge des Seils 30 bzw. der Winkelbereich ß, um den das Pedal niedergedrückt werden kann, ist so bemessen, daß die Rolle 31 bei vollem Pedalweg gerade knapp eine Umdrehung ausführt. Die Rolle 31 ist auf der gleichen'Achse-34 -angeordnet wie das Potentiometer 9. Durch Niedertreten der Trittplatte 18 wird die Rolle 31 über das gespannte Seil 30 in Drehung versetzt und dreht gleichzeitig das Drehpotentiometer 9, das somit ein der Pedalstellung entsprechendes Signal erzeugt. Das freie Ende 29 der Trittplatte 18 sowie die Blattfeder 27 sind jeweils gestrichelt auch für die niedergetretene Position eingezeichnet.

In Fig. 4 ist das gleiche Pedal 6,7 oder 8 wie in Figur 3 gezeigt, jedoch von oben, wobei die Trittplatte 18 nur gestrichelt gezeichnet ist und quasi durchsichtig ist. Alle Teile sind wie oben bezeichnet. Man erkennt den redundanten Aufbau, d.h. alle wichtigen Teile sind doppelt vorhanden und arbeiten unabhängig voneinander. Die beiden Potentiometer 9 und 10 sind unterschiedlich groß gezeichnet, dies symbolisiert den unterschiedlichen Aufbau und soll vermeiden, daß etwa durch Alterungsprozesse beide Potentiometer 9 und 10 vom Sellwert in gleichem Maß abweichen. Bei unterschiedlich Abweichungen durch unterschiedliche Bauweise können sie rechnerisch über die Mikroprozessoren (Figur 1) jederzeit neu geeicht werden.

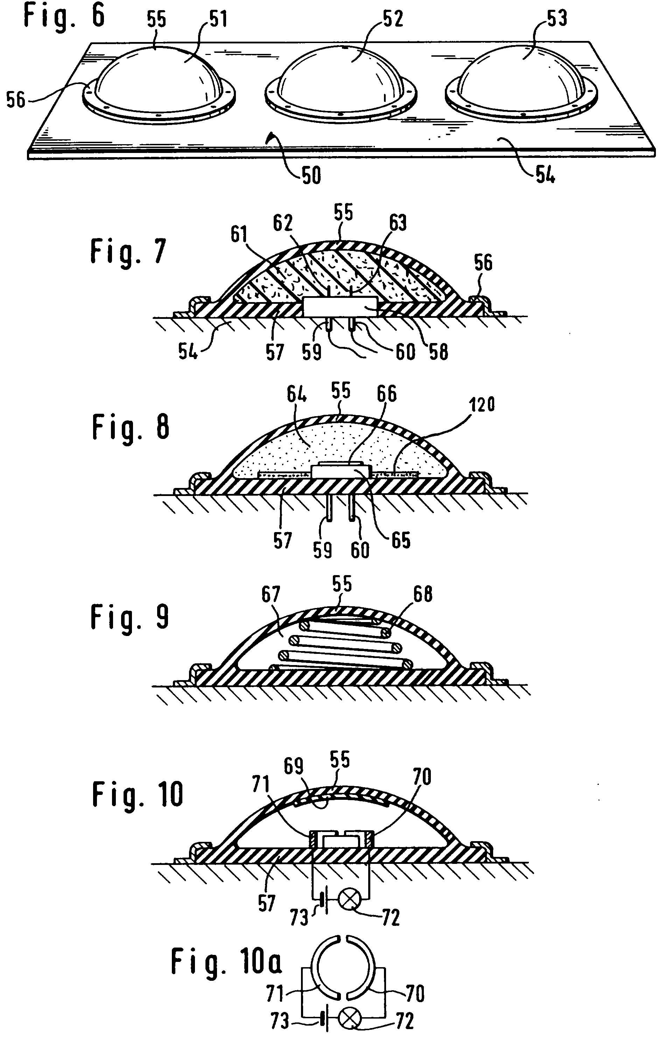

Fig. 5 zeigt eine andere Pedalvariante, die eine Art Knopf darstellt und bei der Betätigung ein ähnliches Gefühl vermittelt wie mechanische, hängende Pedale. Das Gehäuse 35 ist mit einer Grundplatte 36 der Pedaleinheit 1 verschraubt. Ebenfalls mit dem Gehäuse 35 ist das Potentiometer 9 verschraubt, welches als Drehpotentiometer ausgebildet ist. Es wird von einem geschraubten Stab 37 betätigt, der eine Windung aufweist und beim Niedertreten der Kappe 38 durch das mit letzterer verbundene Führungsrohr 39 in Drehung versetzt wird. An der Kappe 38 ist ein Anschlagpuffer 40 vorgesehen, der nach dem vollen Pedalweg w am Gehäuse 35 zur Anlage kommt. Zwischen dem Gehäuse 35 und der Kappe 38 befindet sich außerdem die Rückstellfeder 41 und der das Pedal nach außen abschirmende Faltenbalg 42.

Das Führungsrohr 39 ist mittels einer Kugelhülse 43 nahezu verlustreibungsfrei im Gehäuse 35 geführt, mit einem zweiten Anschlagpuffer 44 zur Anlage an der Kugelhülse 43 in der Ruhestellung ausgerüstet und steht über die Formscheibe 45 mit dem Stab 37 in verbindung, um ihn bei Betätigung in Drehung zu versetzen. Diese Drehung überträgt sich direkt auf das Potentiometer 9.

Auch bei der in Fig. 5 gezeigten Pedalvariante ist ein redundanter Aufbau möglich. Der in Fig. 1 gezeigte Schalter 11 ist dadurch realisiert, daß am Gehäuse 35 ein elektrischer Kontakt 46 und am Führungsrohr 39 oberhalb der Fogmscheibe 45 ein Schleifkontakt 47 ausgebildet ist.

In der Fig. 5 ist links die Ruhestellung und rechts die betätigte Stellung dargestellt.

Fig. 6 zeigt eine abgewandelte Pedaleinheit 50, bei der ein Kupplungspedal 51, ein Bremspedal 52 und ein Gaspedal 53 auf einer Montageplatte 54 vormontiert sind. Selbstverständlich können auch weniger oder mehr Pedale auf der Montageplatte 54 montiert sein. So kann beispielsweise das Kupplungspedal 51 mit dem Gaspedal 53 kombiniert sein, etwa bei Fahrzeugen mit automatischer Kupplung. Weiterhin kann auch der Betätigungszustand einer einzigen Pedale darüber entscheiden, ob und in welchem Zustand das Fahrzeug gebremst oder beschleunigt wird, so daß sich Gas und Bremspedal miteinander vereinigen lassen.

Die Pedaleinheit umfaßt als Gehäuse jeweils eine elastische Kappe 55, die mit einem Befestigungsring 56 an der Montageplatte 54 befestigt ist. Die Befestigung kann dabei, wie in Fig. 6 angedeutet, durch Verschrauben, aber auch durch Verrasten, Verkleben oder eine andere Befestigungsart des Befestigungsrings 56 oder der Kappe 55 selbst mit der Montageplatte 54 erfolgen.

Die elastische Kappe 55 kann man sich als Ausschnitt (Kalotte) eines Gummiballs denken, so daß sie in ihrem Inneren einen Hohlraum besitzt. Gleichzeitig ist durch geeignete Kräfte dafür gesorgt, daß die elastische Kappe 55 nach ihrer äußeren, Oberfläche hin unter Krafteinwirkung steht, so daß sie unter von außen auf sie ausgeübter Kraft elastisch nachgibt. Nach Aufhebung der äußeren Kraft nimmt sie ihren alten Zustand wieder ein, so daß die vorübergehende Verformung wieder aufgehoben wird.

Fig. 7 bis Fig. 10 zeigen mögliche Ausgestaltungen der Pedale 51 bis 53 in geschnittener Darstellung.

In Fig. 7 wird die elastische Kappe 55 wiederum durch den Befestigungsring 56 an der Montageplatte 55 gehalten. Der elastischen Kappe 55 ist ein kreisförmiger Boden 57 einstückig zugeordnet, wobei der Boden 57 mit der Kappe 55 vergossen, verschweißt oder in einem Spritzverfahren einstückig hergestellt sein kann. In einer Öffnung im Boden 57 ist ein Sensor 58 gegenüber möglicherweise ausströmendem Druckmittel abgedichtet eingefügt. Der Sensor besitzt zwei ggf. eingegossene elektrische Anschlüsse 59,60, die mit in den Innenraum 61 der elastischen Kappe 55 ragenden Elektroden 62,63 versehen ist. Der Innenraum 61 ist mit einem Block aus elektrisch leitendem Gummi zumindest teilweise ausgefüllt, wobei die Elektroden 62,63 in den Gummiblock ragen. Der Gummi ist dabei so ausgewählt, daß seine elektrische Leitfähigkeit von dem auf ihn ausgeübten Druck abhängig ist. Die Elektroden 62,63 werden dabei derart innerhalb des Gummiblocks, der den Innenraum 61 ganz oder teilweise ausfüllt, plaziert, daß die auf die äußere Oberfläche der elastischen Kappe 55 ausgeübte Kraft zu einer möglichst großen Änderung des elektrischen Verhaltens des Gummis führt. Das bedeutet, daß die beiden Elektroden 62,63 auch unter Umständen sehr viel weiter auseinanderliegend als in Fig. 7 gezeigt, angeordnet werden können.

Übt nun die Bedienungsperson eines Kraftfahrzeugs mit ihrem Fuß eine Kraft auf die äußere Oberfläche der elastischen Kappe 55 aus, so wird ein entsprechender Druck auf den Innenraum und damit den Gummiblock 61 der Pedaleinheit ausgeübt, was zu einer entsprechenden Stromänderung des durch die Anschlüsse 59,60 geführten Stroms führt. Diese Stromänderung und damit Widerstandsänderung des Gummiblocks ist ein Maß für die von der Bedienungsperson ausgeübte Verformung der Kappe 55 und damit die Höhe der von,der Bedienungsperson verlangten Stellgröße. Auf diese Weise läßt sich durch eine sehr einfache Einheit z.B. die Geschwindigkeit des Fahrzeuges, die Stärke des Bremsvorgangs oder der Kupplungsvorgang in einfacher Weise steuern. Dabei ist es weitgehend gleichgültig, an welchem Punkt der Kappe der Fuß der Bedienungsperson angreift, soweit nur der ausgeübte Druck und damit die Verformung der Kappe hinreichend groß ist.

Fig. 8 beschreibt eine abgewandelte Ausführungsform einer Pedale, wobei die Bezugszeichen nur insoweit eingefügt sind, als sie nicht schon im Zusammenhang mit Fig. 7 erläuterte Bauelemente betreffen.

In Fig,. 8 ist der Innenraum der Kappe 55 mit Druckmittel 64 ausgefüllt, wobei das Druckmittel aus einer Hydraulikflüssigkeit oder aus einem geqigneten Gas bestehen kann. In dem Innenraum der Kappe 55 ist statt des Sensors 58 ein Druckwandler 65 angeordnet, der eine elastische Membran 66 enthält. Der Druckwandler 65 ist wiederum mit zwei elektrischen Anschlüssen 59 und 60 versehen. Der Wandler ist nun derart aufgebaut, daß sein den Anschlüssen 59,60 zugeordneter innerer Widerstand sich mit den auf die Membran 66 ausgeübten Druck verändert. Dabei wird der durch den Fuß der Bedienungsperson auf die Kappe 55 ausgeübte Druck über das Druckmittel 64 auf die Membran 66 übertragen, so daß wiederum ein Stellglied entsteht, welches in Abhängigkeit der von der Bedienungsperson ausgeübten Kraft eine entsprechende Stromänderung über die Anschlüsse 59,60 bedingt. Es ist dabei aber nicht unbedingt notwendig, daß der Sensor 65 infolge der Druckänderung in dem Druckmittel 64 sein Widerstandsverhalten ändert. Es ist auch ein Wandler denkbar, der infolge des auf ihn ausgeübten Drucks eine entsprechende Spannung an den Anschlüssen 59,60 abgibt, bzw. seine Kapazität oder Induktivität verändert.

In Fig. 9 ist in vereinfachter Darstellung eine weitere gegenüber den Fig. 8 und 9 geänderte Ausführungsform der Pedaleinheit gezeigt. Dabei wurde in den Innendraum 67 der Kappe 55 eine Spiralfeder eingefügt, die gleichzeitig zwei Aufgaben hat. Zum einen unterstützt die Spiralfeder 68 die nach außen gerichtete Kraft des Innenraums 67 auf die Innenfläche der Kappe 55. Gleichzeitig ist aber in nicht dargestellter Form die Spiralfeder 68 mit einer Induktionsmeßeinrichtung verbunden, welche die Induktivität der Spiralfeder 68 fortlaufend mißt. Eine Verformung der Kappe 55 führt auch zu einer entsprechenden Änderung des Windungsabstands der Spiralfeder 68 und damit zu einer entsprechenden Änderung der Induktivität dieser Feder. Dieser geänderte Induktionswert wird von dem nicht dargestellten Meßgerät gemessen, wobei der Meßwert ein Maß für die von der Bedienungsperson gewünschte Höhe der Stellgröße ist.

Fig. 10 zeigt wiederum eine zu den Fig. 7, 8 und 9 abgewandelte Ausführungsform der Pedaleinheit, wobei an der Innenfläche der Kappe 55 eine elastische Kontaktfläche 69 befestigt ist, was beispielsweise durch Kleben, Vulkanisieren oder Aufsprühen geschehen kann.

Der Kontaktfläche 69 gegenüberliegend sind in den Boden 57 zwei halbringförmige Elektroden 70,71 angeordnet, welche in Fig. 10a in Draufsicht gezeigt sind. Diese Elektroden 70,71 sind mit einem Warngerät verbunden, welches in Fig. 10 symbolisch als Warnlampe 72 dargestellt ist.

Wird nun die Innenfläche der Kappe 55 mit der Kontaktfläche 69 in Kontakt mit den Elektroden 70,71 gebracht, so spricht wegen des durch beispielsweise eine Batterie 73 veranlaßten Stromflusses die Warneinrichtung 72 an. Hierdurch kann beispielsweise angezeigt werden, daß die Pedaleinheit wegen fehlenden Druckmittels nicht mehr funktionsfähig ist, so daß hier durch Ansprechen der Warneinrichtung entsprechende Sicherheitsvorgänge wie ein selbsttätiger Bremsvorgang, Abschalten des Gases oder ähnliches, vorgenommen werden kann.

Die in den Fig. 7 bis 10 dargestellten Sensoren und Wandler lassen sich kombinieren, indem beispielsweise zwei Wandler bzw. Sensoren unterschiedlichen Typs in einer Pedaleinheit untergebracht sind, so daß man die parallel anfallenden und durch unterschiedliche Wandler gewonnenen Signale auswerten kann und durch deren Redundanz eine erhöhte Sicherheit für die Stellsignale erhält. Selbstverständlich läßt sich auch der Warnkontakt gemäß Fig. 10 mit den Wandlern gemäß Fig. 7 bis 9 kombinieren. Durch diese Maßnahmen wird sichergestellt, daß bei Ausfall eines Wandlers die Bedienungsperson einen Hinweis darauf erhält, welcher Wandler ausgefallen ist, während es gleichzeitig über den parallelgeschalteten zweiten Wandler möglich ist, weiterhin noch Stellsignale zu geben.

In allen dargestellten Varianten ist es vorteilhaft möglich, Teile oder sogar die ganze Hardware einer signalverarbeitenden Elektronik in die Pedaleinheit bzw. die Pedale, z.B. in der Nähe des Sensors, zu integrieren. In Fig. 8 umgibt eine Leiterplatte 120 mit einer solchen Elektronik den Sensor 65, wobei die Elektronik mechanisch durch die Kappe geschützt ist.

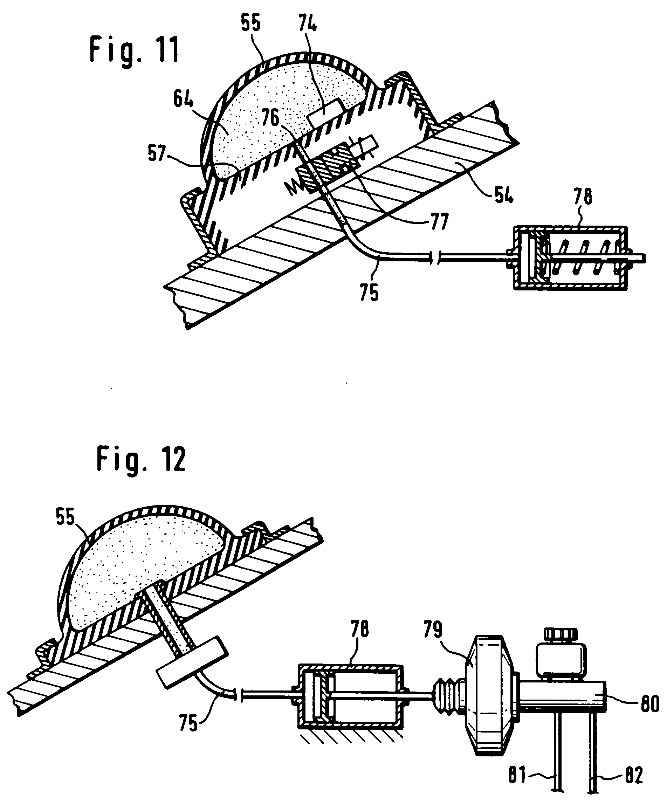

Im Zusammenhang mit Fig. 11 ist symbolisch eine Notbetätigung dargestellt, wie sie durch die erfindungsgemäße Pedaleinheit ausgelöst werden kann. Innerhalb der Kappe 55 ist eine Sensoreinrichtung 74 symbolisch gezeigt, die etwa der Sensoreinrichtung nach Fig. 7 oder 8 entsprechen kann. Der Boden 57 der Kappe wird durch einen Kanal 76 durchdrungen, der in eine Druckmittelleitung 75 übergeht. Der Weg von Kanal 76 und Leitung 75 ist durch ein Zweiwegeventil 77 magnetisch sperrbar bzw. öffenbar. Das Ventil 77 wird magnetisch über die Sensoreinrichtung 74 betrieben. Dabei kann die Sensoreinrichtung sowohl die Funktionen der Wandler bzw. Sensoren gemäß Fig. 7 bis 9 übernehmen als auch gemäß Fig. 10 die Schaltmöglichkeit der Kontakteinrichtungen 69,70 haben. Eine andere Möglichkeit zum Auslösen des Ventils 77 durch die Sensoreinrichtung 74 kann durch einen Schwellwertschalter bestehen, der bei Erreichen eines bestimmten Druckwertes in die in Fig. 11 dargestellte Öffnungsstellung des Ventils 77 schaltet. Hierdurch ergibt sich folgende Steuermöglichkeit. Im Normalzustand gibt die Sensoreinrichtung 74, wie im Zusammenhang mit den Fig. 7 bis 9 beschrieben, ein von der Druckbeaufschlagung der Kappe 55 abhängiges Stellsignal ab. Wird aus irgendeinem Grunde ein bestimmter Druck überschritten oder kommt es zu einem Auslösevorgang, wie im Zusammenhang mit Fig. 10 geschildert, so löst der Magnet des Ventils 11 aus und das Druckmittel des Innenraums der Kappe 55 kann über das Ventil 77 in die Leitung 75 gelangen, von wo es in der Lage ist, einen geeigneten Geber 78 anzusteuern. Durch den Geber 78 können entsprechende Warn- und Hilfsvorrichtungen ausgelöst werden. Es zeigt sich also, daß auch bei Ausfall der Sensoreinrichtung 74 hinsichtlich ihrer analogen Stellwerte über das in dem Innenraum 64 enthaltene Druckmittel noch über den Geber 78 eine Stellfunktion möglich ist. Auf diese Weise kann selbst bei Ausfall der Sensoreinrichtung 74 noch ein Stellvorgang über den Geber 78 gesteuert werden.

Arbeitet andererseits die Sensoreinrichtung 74 in ihrem Normalzustand, so ist das Ventil 77 geschlossen und der Wandler 74 kann über den Druck oder eine andere Steuergröße innerhalb des Innenraums 64 betätigt werden.

Eine weitere Schutzfunktion des Ventils 77 besteht in einer Notfunktion bei Stromausfall. Im Normalfall ist das Ventil bestromt und die hydraulische Wirkung unterbunden. Die Anlage arbeitet dann über den Sensor 74. Fällt der Strom aus, dann öffnet das Ventil und das Pedal arbeitet hydraulisch.

Fig. 12 zeigt die Möglichkeit, in Ergänzung zu Fig. 11 oder aber auch generell über die Kappe 55 und eine Leitung 75 sowie einen Geber 78 eine Hilfskraftbremsanlage, wie beispielsweise einen Bremskraftverstärker 79 zu steuern, von dessen Hauptzylinder 80 dann Bremsleitungen 81,82 abgehen.

Die erfindungsgemäße Pedaleinheit hat eine ganze Reihe von Vorteilen. Zum einen hat sie einen sehr einfachen Aufbau. Zum anderen ist es mit derartigen Pedaleinheiten möglich, sehr viel komplexere Auswertungen über die mit der Pedaleinheit verbundene Elektronik zu ermöglichen, wie dies bisher gegeben war. So kann beispielsweise durch bestimmtes impulsweises Betätigen der elastischen Kappe 55 von einer Auswerteelektronik festgestellt werden, daß der zuletzt eingestellte Geschwindigkeitswert beibehalten werden soll, so daß die Fahrzeuggeschwindigkeit dann auf diesen Wert eingeregelt werden kann. Eine andere Möglichkeit besteht in der leichten Auswechselbarkeit der Pedaleinheiten, so daß diese in ihrem Ansprechverhalten auf unterschiedliche Bedienungspersonen einestellt werden können, indem beispielsweise das Ansprechverhalten der Sensoren elektronisch geändert wird, so daß in einfacher Weise das Pedal an das mehr oder weniger empfindliche Verhalten der Bedienungsperson und deren zur Steuerung zur Verfügung stehende Kräfte angepaßt werden kann.

## Patentansprüche

1. Pedaleinheit (1;50) für ein Kraftfahrzeug, bestehend aus zumindest einem Gaspedal (6;53), welches eine in die Pedaleinheit (1;50) integrierte elektrisch gesteuerte Einrichtung (9,10,11) betätigt, wobei die Pedaleinheit mit elektrischen Anschlüssen zur Energieversorgung (2) und zur Informationsweitergabe verbindbar ist, dadurch **gekennzeichnet**, daß ein Bremspedal (7;52) und ggf. ein Kupplungspedal (8;51) vorhanden ist und jedes der Pedale (6,7,8;53,52,51) eine in die Pedaleinheit (1;50) integrierte zugehörige, elektrisch gesteuerte Einrichtung (9,10,11) betätigt, welche mit einer gemeinsamen, ebenfalls in die Pedaleinheit (1;50) integrierte Datenverarbeitungsstufe (12 - 17) verbunden sind, die ihrerseits zur Informationsweitergabe mit einem Datenbus (4) in Verbindung steht.

2. Pedaleinheit nach Anspruch 1 dadurch **gekennzeichnet**, daß sie mehrere Pedale besitzt, die in ihr vormontiert sind.

3. Pedaleinheit nach Anspruch 2 dadurch **gekennzeichnet**, daß die Datenverarbeitungsstufe zwei Datenverarbeitsungszweige (12 - 14 bzw. 15 - 17) aufweist, zwischen denen ein Datenaustausch stattfindet.

4. Pedaleinheit nach einem der vorhergehenden Ansprüche dadurch **gekennzeichnet**, daß jedes der Pedale (6,7,8) mindestens zwei voneinander unabhängige Einrichtungen (9,10,11) zur Erzeugung von elektrischen Signalen aufweist.

5. Pedaleinheit nach einem der vorhergehenden Ansprüche dadurch **gekennzeichnet**, daß jedes der Pedale (6,7,8) zwei die Pedalstellung genau wiedergebende Signale und ein eine Schwellwertüberschreitung wiedergebendes Signal erzeugt.

6. Pedaleinheit nach einem der vorhergehenden Ansprüche dadurch **gekennzeichnet**, daß zur Erzeugung von die Pedalstellung wiedergebenden Signalen Drehpotentiometer (9,10) mit einem Weg- oder Winkelgeber bzw. digitalem Stellungsgeber vorgesehen sind.

7. Pedaleinheit nach Anspruch 6 dadurch **gekennzeichnet**, daß jedes Drehpotentiometer (9,10) durch ein Seil (30) oder einen Zahnriemen betätigbar ist, welcher von einer Zugfeder (32) straff gehalten ist, mit einer Trittplatte (18) fest verbunden ist und über eine Rolle (31) läuft, deren Achse (34) drehfest mit der Achse (34) des Drehpotentiometers (9,10) verbunden ist.

8. Pedaleinheit nach Anspruch 6 dadurch **gekennzeichnet**, daß jedes Drehpotentiometer (9,10) durch einen geschraubten Stab (37) betätigbar ist, der beim Niedertreten des Pedals (6,7,8) in Drehung versetzt wird und direkt auf das Drehpotentiometer (9,10) einwirkt.

9. Pedaleinheit nach einem der vorhergehenden Ansprüche dadurch **gekennzeichnet**, daß jedem Pedal (6,7,8) zwei unterschiedliche Potentiometer (9,10) zugeordnet sind.

10. Pedaleinheit nach einem der vorhergehenden Ansprüche dadurch **gekennzeichnet**, daß unterhalb der Trittplatte (18) mindestens eine Blattfeder (27) angeordnet ist, die mit verschiedenen Anschlägen (28) zusammenwirkt.

11. Pedaleinheit nach Anspruch 10 dadurch **gekennzeichnet**, daß an dem Ende der Trittplatte (18), an dem sich die Ferse des Fahrers befindet, eine verstellbare Stütze (19) vorgesehen ist.

12. Pedaleinheit nach einem der vorhergehenden Ansprüche dadurch **gekennzeichnet**, daß diese als Ganzes in der Neigung verstellbar ist.

13. Pedaleinheit nach Anspruch 11 oder 12 dadurch **gekennzeichnet**, daß alle Verstellmechanismen elektrisch betätigbar sind.

14. Pedaleinheit nach Anspruch 13 dadurch **gekennzeichnet**, daß die Verstellmechanismen mit einer Sitz-Memory-Funktion kombiniert sind.

15. Pedaleinheit (50) nach einem der vorhergehenden Ansprüche, dadurch **gekennzeichnet**, daß zumindest eines der Pedale (51 - 53) als ein innerhalb eines zumindest teilweise elastischen Gehäuses (55) angeordneter Drucksensor (58,65,68) ausgestaltet ist.

16. Pedaleinheit nach Anspruch 15, dadurch **gekennzeichnet**, daß das Gehäuse durch eine elastische Kappe (55) gebildet ist, durch deren Verformung der analoge Stellwert auf Drucksensor (58,65,68) aufgebracht wird.

17. Pedaleinheit nach Anspruch 15 oder 16, dadurch **gekennzeichnet**, daß der Sensor (58) ein mit zwei beabstandeten Elektroden (62,63) verbundener, an das Gehäuse (55) angrenzender Block aus elektrisch leitendem Gummi mit druckabhängiger Strom-Spannungscharakteristik ist.

18. Pedaleinheit nach Anspruch 16, dadurch **gekennzeichnet**, daß die Verbindung des Gehäuses (55) mit dem zugehörigen Boden (57) einen druckmitteldichten Hohlraum (64) bildet, in dem ein auf Druckänderungen des Mediums ansprechender Wandler (65), insbesondere Druckwiderstandswandler, angeordnet ist, welcher die durch eine Volumenänderung des Hohlraums (64) bedingte Druckänderung des Druckmittels in eine entsprechende Stellgröße, vorzugsweise Strom-und/oder Spannungsänderung umwandelt.

19. Pedaleinheit nach Anspruch 15 oder 16, dadurch **gekennzeichnet**, daß der Sensor (68) durch eine an der Kappe abstrebenden Feder, vorzugsweise Spiralfeder (68) gebildet ist, deren Verformungen durch einen geeigneten Induktionsmesser abgreifbar sind.

20. Pedaleinheiteinheit nach Anspruch 19, dadurch **gekennzeichnet**, daß die Feder (68) eine kegelförmige Spiralfeder ist, die sich mit ihrer äußeren Windung großen Durchmessers am Boden (57) der Kappe (55) und mit ihrer entgegengesetzten Windung an der Innenfläche der Kappe (55) abstützt.

21. Pedaleinheit nach Anspruch 15, dadurch **gekennzeichnet**, daß am Boden (57) des Pedals (51 bis 53) zwei Kontaktelektroden (70,71) angeordnet sind, die mittels einer an der Innenfläche des Gehäuses (55) angeordneten Kontaktfläche (69) kurzschließbar sind.

22. Pedaleinheit nach einem der Ansprüche 15 bis 21, dadurch **gekennzeichnet**, daß eine elastische Kappe (55) mit der Montageplatte (54) durch eine Klemmfassung, Kleben oder Verschweißen druckdicht verbunden ist.

23. Pedaleinheit nach einem der vorangegangenen Ansprüche, dadurch **gekennzeichnet**, daß eine elastische Kappe (55) mit einem druckmitteldichten Innenraum (64) mit Druckmittel gefüllt ist und der Innenraum über eine Druckmittelleitung (75) mit einem Betätigungsglied (78) in Verbindung steht, welches in Abhängigkeit von dem Druck in der Leitung (75) eine Fremdkraftbremsanlage (79 bis 82) betätigt.

24. Pedaleinheit nach Anspruch 23, dadurch **gekennzeichnet**, daß in die Leitung (75) ein Ventil (27) eingefügt ist, welches öffnet, sobald das Ausgangssignal des Sensors bzw. Wandlers einen vorgegebenen Wert erreicht.

25. Pedaleinheit nach Anspruch 24, dadurch **gekennzeichnet**, daß das Ventil (27) durch Kurzschließen der Kontaktflächen (70,71) durchlässig geschaltet wird.

26. Pedaleinheit nach einem der Ansprüche 15 bis 25, dadurch **gekennzeichnet**, daß eine intelligente elektronische Auswerteschaltung (120) in dem zumindest teilweise elastischen Gehäuse (55) angeordnet ist.

## Claims

1. A pedal assembly (1; 50) for an automotive vehicle composed of at least one accelerator pedal (6; 53) actuating an electrically controlled device (9, 10, 11) integrated in the pedal assembly (1; 50), the pedal assembly being connectible to electric connections of an energy supply unit (2) and for the data transfer,
**characterized** in that a brake pedal (7; 52) and possibly a clutch pedal (8; 51) are provided, and each of the pedals (6, 7, 8; 53, 52, 51) actuates an electrically controlled device (9, 10, 11) integrated in the pedal assembly (1; 50), which are connected to a joint data-processing stage (12 to 17) also integrated in the pedal assembly (1; 50) and being, in turn, connected to a data bus (4) for the data transfer.

2. A pedal assembly as claimed in claim 1,
**characterized** in that it comprises a number of pedals pre-assembled in it.

3. A pedal assembly as claimed in claim 2,
**characterized** in that the data-processing stage has two data-processing branches (12 to 14 or 15 to 17, respectively), between which data transfer is effected.

4. A pedal assembly as claimed in any one of the preceding claims,
**characterized** in that each of the pedals (6, 7, 8) has at least two devices (9, 10, 11), independent of one another, to generate electric signals.

5. A pedal assembly as claimed in any one of the preceding claims,
**characterized** in that each of the pedals (6, 7, 8) generates two signals exactly indicative of the pedal position as well as one signal indicative of the exceeding of a threshold value.

6. A pedal assembly as claimed in any one of the preceding claims,
**characterized** in that for generating signals indicative of the pedal position, rotary potentiometers (9, 10) are provided with a travel indicator or angle indicator and/or a digital position indicator.

7. A pedal assembly as claimed in claim 6,
**characterized** in that each rotary potentiometer (9, 10) is operable by a rope (30) or a toothed belt which is held tight by a tension spring (32), is rigidly coupled to a foot board (18) and runs over a pulley (31), the axis (34) of which is unrotatably connected with the axis (34) of the rotary potentiometer (9, 10).

8. A pedal assembly as claimed in claim 6,
**characterized** in that each rotary potentiometer (9, 10) is operable by a screwed rod (37) which is moved to rotate on depression of the pedal (6, 7, 8) and acts directly upon the rotary potentiometer (9, 10).

9. A pedal assembly as claimed in any one of the preceding claims,
**characterized** in that each pedal (6, 7, 8) is furnished with two different potentiometers (9, 10).

10. A pedal assembly as claimed in any one of the preceding claims,
**characterized** in that at least one leaf spring (27) is arranged beneath the foot board (18) and cooperates with different stops (28).

11. A pedal assembly as claimed in claim 10,
**characterized** in that an adjustable support (19) is provided at the end of the foot board (18) where the heel of the driver is placed.

12. A pedal assembly as claimed in any one of the preceding claims,
**characterized** in that it is adjustable as a whole in its inclination.

13. A pedal assembly as claimed in claim 11 or 12,
**characterized** in that all adjustment mechanisms are electrically operable.

14. A pedal assembly as claimed in claim 13,
**characterized** in that the adjustment mechanisms are combined with a seat-memory function.

15. A pedal assembly (50) as claimed in any one of the preceding claims,
**characterized** in that at least one of the pedals (51 to 53) is configured as a pressure sensor (58, 65, 68) which is arranged within an at least partly elastic housing (55).

16. A pedal assembly as claimed in claim 15,
**characterized** in that the housing is formed by an elastic cap (55), by the deformation of which the analogous place value is applied to the pressure sensor (58, 65, 68).

17. A pedal assembly as claimed in claim 15 or 16,
**characterized** in that the sensor (58) is a block of electrically conductive rubber with a pressure-responsive current-voltage characteristics, the block being connected with two spaced electrodes (62, 63) and adjacent to the housing (55).

18. A pedal assembly as claimed in claim 16,
**characterized** in that the connection of the housing (55) with the associated bottom (57) forms a pressure-fluid-tight cavity (64) in which a transducer (65) responding to pressure variations of the medium, in particular a pressure resistance transducer, is arranged which converts the pressure variation of the pressure fluid, which is due to a change in the volume of the cavity (64), into a corresponding control quantity, preferably a change in current and/or voltage.

19. A pedal assembly as claimed in claim 15 or 16,
**characterized** in that the sensor (68) is formed by a spring jutting from the cap, preferably a spiral spring (68), the deformations of which are adapted to be tapped by a suitable inductometer.

20. A pedal assembly as claimed in claim 19,
**characterized** in that the spring (68) is a conical spiral spring which takes support on the bottom (57) of the cap (55) with its external winding of large diameter, while, with its opposite winding, it takes support on the inner surface of the cap (55).

21. A pedal assembly as claimed in claim 15,
**characterized** in that two contact electrodes (70, 71) are arranged on the bottom (57) of the pedal (51 to 53) which are adapted to be shortcircuited by means of a contact surface (69) arranged on the inner surface of the housing (55).

22. A pedal assembly as claimed in any one of the claims 15 to 21,
**characterized** in that an elastic cap (55) is pressure-tightly connected to the assembly plate (54) by a clamping fit, by cementing, or by welding.

23. A pedal assembly as claimed in any one of the preceding claims,
**characterized** in that an elastic cap (55) with a pressure-fluid-tight interior space (64) is filled with pressure fluid, and in that the interior space is via a pressure-fluid line (75) in communication with an actuating member (78) which operates an auxiliary-force brake system (79 to 82) in dependence on the pressure in the line (75).

24. A pedal assembly as claimed in claim 23,
**characterized** in that a valve (27) is inserted into the line (75) and opens as soon as the output signal of the sensor or, respectively, transducer reaches a predetermined value.

25. A pedal assembly as claimed in claim 24,
**characterized** in that the valve (27) is switched to the open condition by shortcircuiting of the contact surfaces (70, 71).

26. A pedal assembly as claimed in any one of the claims 15 to 25,
**characterized** in that an intelligent electronic evaluating circuitry (120) is arranged in the at least partly elastic housing (55).

## Revendications

1. Ensemble de pédalier (1; 50) pour un véhicule automobile, composé d'au moins une pédale d'accélérateur (6; 53), qui actionne un dispositif (9, 10, 11) à commande électrique, intégré dans l'ensemble de pédalier (1; 50), l'ensemble de pédalier pouvant être relié via des bornes de raccordement électrique à une alimentation en énergie (2),
caractérisé en ce qu'une pédale de frein (7; 52) et, le cas échéant, une pédale d'embrayage (8; 51) existe(nt), et que chacune des pédales (6, 7, 8; 53, 52, 51) actionne un dispositif associé (9, 10, 11) à commande électrique, intégré dans l'ensemble de pédalier (1; 50), qui est relié à un étage (12 à 17) de traitement des données le même intégré dans l'ensemble de pédalier (1; 50), cet étage étant à son tour relié à un bus de données (4) en vue de transmettre les informations.

2. Ensemble de pédalier selon la revendication 1, caractérisé en ce qu'il comporte plusieurs pédales pré-montées sur celui-ci.

3. Ensemble de pédalier selon la revendication 2, caractérisé en ce que l'étage de traitement des données comporte deux branches (12 à 14 et 15 à 17) de traitement des données, entre lesquelles un échange de données a lieu.

4. Ensemble de pédalier selon l'une des revendications précédentes, caractérisé en ce que chacune des pédales (6, 7, 8) comporte au moins deux dispositifs (9, 10, 11) de génération de signaux électriques, indépendants l'un de l'autre.

5. Ensemble de pédalier selon l'une des revendications précédentes, caractérisé en ce que chacune des pédales (6, 7, 8) génère deux signaux représentant la position exacte de la pédale, et un signal représentant un dépassement d'une valeur seuil.

6. Ensemble de pédalier selon l'une des revendications précédentes, caractérisé en ce que des potentiomètres rotatifs (9, 10) comportant un capteur numérique de course ou d'angle ou de position sont prévus pour générer les signaux représentant la position de la pédale.

7. Ensemble de pédalier selon la revendication 6, caractérisé en ce que chaque potentiomètre rotatif (9, 10) peut être actionné via un câble (30) ou une courroie crantée, maintenu(e) tendu(e) par un ressort de traction (32), relié(e) de façon fixe à une pédale-plateau (18) et se déroulant autour d'une poulie (31) dont l'axe (34) est relié de façon solidaire en rotation à l'axe (34) du potentiomètre rotatif (9, 10).

8. Ensemble de pédalier selon la revendication 6, caractérisé en ce que chaque potentiomètre rotatif peut être actionné par l'intermédiaire d'une tige (37) pourvue d'un pas de vis, qui est mise en rotation lors de l'enfoncement de la pédale (6, 7, 8) et agit directement sur le potentiomètre rotatif (9, 10).

9. Ensemble de pédalier selon l'une des revendications précédentes, caractérisé en ce que deux potentiomètres (9, 10) différents sont associés à chacune des pédales (6, 7, 8).

10. Ensemble de pédalier selon l'une des revendications précédentes, caractérisé en ce qu'en dessous de la pédale-plateau (18), au moins un ressort à lame (27) est disposé, qui coopère avec différentes butées (28).

11. Ensemble de pédalier selon la revendication 10, caractérisé en ce qu'un repose-pied réglable (19) est agencé à l'extrémité de la pédale-plateau (18), à laquelle se situe le talon du conducteur.

12. Ensemble de pédalier selon l'une quelconque des revendications précédentes, caractérisé en ce que l'ensemble entier est réglable en inclinaison.

13. Ensemble de pédalier selon la revendication 11 ou 12, caractérisé en ce que tous les mécanismes de réglage peuvent être commandés électriquement.

14. Ensemble de pédalier selon la revendication 13, caractérisé en ce que les mécanismes de réglage sont combinés avec une fonction de mémoire des réglages du siège.

15. Ensemble de pédalier (50) selon l'une des revendications précédentes, caractérisé en ce que l'une au moins des pédales (51 à 53) est réalisée sous forme d'un capteur de pression (58, 65, 68) disposé à l'intérieur d'une enveloppe (55) au moins partiellement élastique.

16. Ensemble de pédalier selon la revendication 15, caractérisé en ce que l'enveloppe est constituée par un capuchon élastique (55), dont la déformation produit une valeur de réglage analogique au niveau du capteur de pression (58, 65, 68).

17. Ensemble de pédalier selon la revendication 15 ou 16, caractérisé en ce que le capteur (58) est un bloc en caoutchouc électriquement conducteur relié à deux électrodes (62, 63), placé de façon adjacente à l'enveloppe (55), et présentant une caractéristique courant-tension dépendant de la pression.

18. Ensemble de pédalier selon la revendication 16, caractérisé en ce que la liaison entre l'enveloppe (55) et le fond associé (57) définit une cavité (64) étanche aux fluides sous pression, à l'intérieur de laquelle est disposé un convertisseur (65) réagissant aux changements de pression du fluide, notamment un convertisseur pression-résistance, qui convertit le changement de pression du fluide de pression, résultant d'un changement du volume de la cavité (64), en une grandeur de réglage correspondante, de préférence en une modification du courant et/ou de la tension.

19. Ensemble de pédalier selon la revendication 15 ou 16, caractérisé en ce que le capteur (68) est constitué par un ressort s'appuyant sur le capuchon, de préférence par un ressort hélicoïdal (68), dont les déformations peuvent être détectés au moyen d'un dispositif approprié de mesure d'inductance.

20. Ensemble de pédalier selon la revendication 19, caractérisé en ce que le ressort (68) est un ressort hélicoïdal conique, dont la spire extérieure de grand diamètre s'appuie sur le fond (57) du capuchon (55), et dont la spire opposée s'appuie sur la face intérieure du capuchon (55).

21. Ensemble de pédalier selon la revendication 15, caractérisé en ce que deux électrodes de contact (70, 71) sont disposées sur le fond (57) de la pédale (51 à 53), et peuvent être court-circuitées par l'intermédiaire d'une surface de contact (69) agencée à la surface intérieure de l'enveloppe (55).

22. Ensemble de pédalier selon l'une des revendications 15 à 21, caractérisé en ce qu'un capuchon élastique (55) est relié à la plaque de montage (54) de façon étanche à la pression par sertissage, par collage ou par soudage.

23. Ensemble de pédalier selon l'une des revendications précédentes, caractérisé en ce qu'un capuchon élastique (55) contenant une cavité intérieure (64) étanche aux fluides sous pression est rempli d'un fluide de pression, et que la cavité intérieure est reliée à un élément actionneur (78) par l'intermédiaire d'une conduite (75) de fluide sous pression, l'élément actionneur actionnant un système de freinage à commande par force extérieure (79 à 82) en fonction de la pression régnant dans la conduite (75).

24. Ensemble de pédalier selon la revendication 23, caractérisé en ce qu'une valve (27) est insérée dans la conduite (75), qui s'ouvre dès que le signal de sortie du capteur ou convertisseur atteint une valeur prédéterminée.

25. Ensemble de pédalier selon la revendication 24, caractérisé en ce que la valve (27) est commutée en mode passant par mise en court-circuit des surfaces de contact (70, 71).

26. Ensemble de pédalier selon l'une des revendications 15 à 25, caractérisé en ce qu'un circuit de traitement électronique "intelligent" (120) est disposé à l'intérieur de l'enveloppe au moins partiellement élastique (55).
